# EUROPÄISCHE PATENTSCHRIFT

(11) **EP 4 185 510 B1**
(45) Veröffentlichungstag und Bekanntmachung des Hinweises auf die Patenterteilung: **11.09.2024**
(21) Anmeldenummer: 21746681.2
(22) Anmeldetag: 19.07.2021
(51) Int. Cl.: B62D 5/00

(54) **FEEDBACK-AKTUATOR FÜR EINE LENKEINRICHTUNG EINES KRAFTFAHRZEUGS UND LENKSÄULE FÜR EIN KRAFTFAHRZEUG**
FEEDBACK ACTUATOR FOR A STEERING DEVICE OF A MOTOR VEHICLE AND STEERING COLUMN FOR A MOTOR VEHICLE
ACTIONNEUR DE RÉTROACTION POUR UN DISPOSITIF DE DIRECTION D'UN VÉHICULE AUTOMOBILE ET COLONNE DE DIRECTION POUR UN VÉHICULE AUTOMOBILE

(30) Priorität: 23.07.2020 DE 102020209301
(43) Veröffentlichungstag der Anmeldung: 31.05.2023
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH); BAYER, Tim, 9450 Lüchingen (CH)
(74) Vertreter: thyssenkrupp Intellectual Property GmbH
(86) Internationale Anmeldenummer: PCT/EP2021/070067
(87) Internationale Veröffentlichungsnummer: WO 2022/017996

(56) Entgegenhaltungen:
- WO-A1-2019/042531
- WO-A1-2020/043233
- DE-A1- 102017 214 530
- DE-A1- 102018 130 513
- DE-A1- 102018 214 917
- DE-A1- 102019 101 376
- FR-A- 1 051 476
- US-A1- 2004 011 585
- US-A1- 2020 148 248
- US-B2- 10 661 823

## Beschreibung

### Stand der Technik

Die Erfindung betrifft einen Feedback-Aktuator für eine Lenkeinrichtung eines Kraftfahrzeugs, umfassend eine um eine in Längsrichtung erstreckte Längsachse drehbar gelagerte Lenkwelle, die mit der Motorwelle eines elektrischen Motors über einen Riementrieb drehend antreibbar gekuppelt ist, der mindestens ein Riemenscheibenpaar mit zwei von einem Riemen umschlungenen Riemenscheiben aufweist, von denen eine mit der Motorwelle und eine mit der Lenkwelle wirkverbunden ist. Eine Lenksäule für ein Kraftfahrzeug ist ebenfalls Gegenstand der Erfindung.

Steer-by-Wire-Lenksysteme für Kraftfahrzeuge nehmen manuelle Lenkbefehle des Fahrers wie konventionelle mechanische Lenkungen durch Drehung eines Lenkrades einer Eingabeeinheit entgegen, welches am fahrerseitigen, hinteren Ende einer in der Lenksäule gelagerten Lenkwelle, der Lenkspindel, angebracht ist. Die Lenkwelle ist jedoch nicht mechanisch über das Lenkgetriebe mit den zu lenkenden Rädern verbunden, sondern wirkt mit Drehwinkel- bzw. Drehmomentsensoren zusammen, die den eingebrachten Lenkbefehl erfassen und daraus ein elektrisches Steuersignal erzeugen und an einen Lenksteller abgeben, der mittels eines elektrischen Stellantriebs einen dem Lenkbefehl entsprechenden Lenkeinschlag der Räder einstellt.

Durch die fehlende mechanische Kopplung erhält der Fahrer bei Steer-by-Wire-Systemen von den gelenkten Rädern keine unmittelbare physische Rückmeldung über den Lenkstrang, welche bei konventionellen mechanisch gekoppelten Lenkungen als Reaktions- bzw. Rückstellmoment in Abhängigkeit von der Fahrbahnbeschaffenheit, der Fahrzeuggeschwindigkeit, dem aktuellen Lenkwinkel und weiterer Betriebszustände auf das Lenkrad zurück übertragen wird. Die fehlende haptische Rückmeldung erschwert dem Fahrer, aktuelle Fahrsituationen sicher zu erfassen und angemessene Lenkmanöver durchzuführen, wodurch die Fahrzeuglenkbarkeit und damit die Fahrsicherheit beeinträchtigt werden.

Zur Erzeugung eines realistischen Fahrgefühls ist es im Stand der Technik bekannt, aus einer tatsächlichen momentanen Fahrsituation Parameter wie Fahrzeuggeschwindigkeit, Lenkwinkel, Lenkungs-Reaktionsmoment und dergleichen zu erfassen oder in einer Simulation zu berechnen, und aus diesen ein Rückkopplungs-Signal zu bilden, welches in einen Feedback-Aktuator eingespeist wird. Der Feedback-Aktuator ist bevorzugt in die Lenksäule des Fahrzeugs integriert und weist einen Handmoment- oder Lenkradsteller mit einer Antriebseinheit auf, die abhängig vom Rückkopplungs-Signal ein dem realen Reaktionsmoment entsprechendes Rückstellmoment oder Feedbackmoment über die Lenkwelle in das Lenkrad einkoppelt. Derartige "Force-feedback"-Systeme geben dem Fahrer den Eindruck einer realen Fahrsituation wie bei einer konventionellen Lenkung, was eine intuitive Reaktion erleichtert.

Aus der WO 2019/042531 A1 ist ein gattungsgemäßer Feedback-Aktuator der eingangs genannten Art bekannt, bei dem als Getriebe zur Drehmomentübertragung und Drehzahlanpassung zwischen dem Motor und der Lenkwelle ein Riementrieb angeordnet ist. Dieser umfasst mindestens ein Riemenscheibenpaar, welches zwei unterschiedlich große Riemenscheiben aufweist, die auch als Riemenräder bezeichnet werden, um die ein endloser Riemen umläuft. Die motorseitige Antriebsriemenscheibe ist auf der Motorwelle des Motors angebracht, und die lenkwellenseitige Abtriebsriemenscheibe ist mit der Lenkwelle verbunden. Vorteile des Riementriebs sind die hohe Laufruhe und das relativ niedrige Gewicht. Dadurch, dass die Motorwelle einen radialen Anstand zur Längsachse hat, der konstruktionsbedingt größer ist als die Summe der Riemenscheibenradien, wird jedoch ein relativ großes Bauvolumen beansprucht, was durch das von der Längsachse radial ausladende Riemenscheibenpaar nachteilig für die bauliche Integration des Feedback-Aktuators in eine Lenksäule ist.

Angesichts der vorangehend erläuterten Problematik ist es eine Aufgabe der vorliegenden Erfindung, bei einem riemengetriebenen Feedback-Aktuator eine optimierte Bauform mit geringerem Bauvolumen zu ermöglichen.

### Darstellung der Erfindung

Diese Aufgabe wird erfindungsgemäß gelöst durch den Feedback-Aktuator mit den Merkmalen des Anspruchs 1 und die Lenksäule gemäß Anspruch 10. Vorteilhafte Weiterbildungen ergeben sich aus den Unteransprüchen.

Bei einem Feedback-Aktuator für eine Lenkeinrichtung eines Kraftfahrzeugs, umfassend eine um eine in Längsrichtung erstreckte Längsachse drehbar gelagerte Lenkwelle, die mit der Motorwelle eines elektrischen Motors über einen Riementrieb drehend antreibbar gekuppelt ist, der mindestens ein Riemenscheibenpaar mit zwei von einem Riemen umschlungenen Riemenscheiben aufweist, von denen eine mit der Motorwelle und eine mit der Lenkwelle wirkverbunden ist, ist erfindungsgemäß vorgesehen, dass die zwei Riemenscheiben des Riemenscheibenpaars koaxial zueinander oder winklig zueinander angeordnet sind.

Erfindungsgemäß sind die beiden Riemenscheiben eines Riemenscheibenpaars, über die der Riemen umläuft und die somit ein einstufiges Riemengetriebe bzw. eine Getriebestufe eines Riemengetriebes bilden, nicht wie im Stand der Technik bezüglich der Längsachse mit Abstand radial bzw. quer versetzt angeordnet, sondern koaxial auf der Längsachse nebeneinander bzw. hintereinander oder winklig zueinander angeordnet.

Bei der koaxialen Anordnung der zwei Riemenscheiben des Riemenscheibenpaars können bevorzugt die Riemenscheiben axialen Abstand haben. Anstelle der radial relativ weit vorstehenden Riemenscheibenanordnung können die Riemenscheiben eines Riemenscheibenpaars dank der Erfindung in Längsrichtung hintereinander angeordnet werden, wodurch eine vorteilhaft schlanke Bauform realisierbar ist. Dabei kann durch die in axialer Richtung langgestreckte Bauweise der durch die Baulänge einer Lenksäule in Längsrichtung zur Verfügung stehende längliche axiale Bauraum optimal zur Unterbringung des Riementriebs genutzt werden. Dadurch wird in die Integration eines riemengetriebenen Feedback-Aktuators in die Manteleinheit einer Lenksäule ermöglicht und erleichtert, und die spezifischen Vorteile des Riementriebs wie das geringe Laufgeräusch und das geringe Gewicht können optimal in einem Steer-by-Wire-Lenksystem genutzt werden.

Unter der winkligen Anordnung ist zu verstehen, das die Riemenscheiben jeweils eine Rotationsachse aufweisen, wobei diese Rotationsachsen zueinander winklig angeordnet sind, sprich unparallel relativ zueinander ausgerichtet sind.

Bevorzugt beträgt der Winkel der Rotationsachsen zwischen 10° und 80°, besonders bevorzugt zwischen 30° und 60°, ganz besonders bevorzugt 45°.

Bei einem erfindungsgemäßen Riementrieb läuft mindestens ein durchgehender Riemen über die beiden Riemenscheiben eines axial versetzten oder winklig angeordneten Riemenscheibenpaars, die also beide von dem umlaufenden Riemen umschlungen sind. Die Riemenscheiben können bevorzugt koaxial auf der Längsachse angeordnet und relativ zu dieser drehbar gelagert sein, die mit der Motorachse der Motorwelle und der Lenkwelle zusammenfällt.

Bevorzugt haben die beiden Riemenscheiben eines Riemenscheibenpaars haben einen gemäß dem Übersetzungsverhältnis unterschiedlichen Durchmesser. Durch die erfindungsgemäß axiale Anordnung ist das erforderliche radiale Bauvolumen durch den Durchmesser der größeren Riemenscheibe vorgesehen, und ist somit in jedem Fall in vorteilhafter Weise kleiner als im Stand der Technik, in dem der Durchmesser der anderen Riemenscheibe in radialer Richtung addiert werden muss.

Eine vorteilhafte Ausführung sieht vor, dass der Riemen parallel zu einer Riemenebene angeordnet ist, die schräg relativ zur Längsachse angeordnet ist. Zwischen den Bereichen, in denen der Riemen auf den Laufflächen oder Riemenlaufflächen an den Riemenscheiben anliegt, erstrecken sich die Trume, nämlich die freien Riemenabschnitte, und zwar abgesehen von leichten Durchbiegungen durch Riemenspiel im Wesentlichen gerade. Während im Stand der Technik die Trume beide senkrecht zur Längsachse stehen, also in eine durch die Trume aufgespannten, zur Längsachse senkrecht stehenden Trum- oder Riemenebene, verlaufen bei der Erfindung die Trume relativ zur Längsachse schräg geneigt zwischen den axial beabstandeten Laufflächen am Umfang der beiden Riemenscheiben. Der Neigungswinkel der Trume, und damit der durch diese aufgespannten Trum- oder Riemenebene, zur Längsachse ist kleiner als 90° und größer als 0°. Durch den schräg angeordneten Riemen kann das Antriebsmoment durch einen einzigen Riemen zwischen den beiden koaxial angeordneten Riemenscheiben übertragen werden, wodurch vorteilhaft kein oder nur geringer radialer Bauraum außerhalb des Durchmessers der Riemenscheiben erforderlich ist, maximal bedingt durch Dicke des Riemens.

Der erfindungsgemäße Riementrieb mit dem schräg zur gemeinsamen Drehachse der beiden Riemenscheiben eines Riemenscheiben umlaufenden Riemen, oder anders ausgedrückt, bei dem die Trume diagonal zwischen bezüglich der gemeinsamen Längsachse einander gegenüberliegenden Laufflächenabschnitten der beiden Riemenscheiben verlaufen, kann auch als Schräg- oder Diagonalriementrieb bezeichnet werden. Dieses Schrägriemenkonzept ist bei den herkömmlichen Riementrieben wie in dem eingangs genannten Stand der Technik nicht vorgesehen. Durch die erfindungsgemäße Umsetzung wird eine vorteilhaft kompakte und axiale Bauweise ermöglicht, und zwar von einer oder mehreren axial hintereinander geschalteten Riemenscheibenpaaren, d.h. Stufen eines mehrstufigen Riementriebs. Dabei bleibt die leichte Bauweise und die vorteilhafte Momentübertragungscharakteristik eines Riementriebs erhalten, was für die Anwendung in einem Feedback-Aktuator und die Integration in eine Lenksäule besonders günstig ist.

Der Neigungswinkel des Riemens ist abhängig vom axialen Abstand und vom Durchmesser der Riemenscheiben, wobei ein geringer Abstand und/oder große Durchmesser zu einem größeren Neigungswinkel, und ein großer Abstand und/oder kleine Durchmesser zu einem kleineren Neigungswinkel führen.

Eine vorteilhafte Realisierung der Erfindung kann dadurch erfolgen, dass die zwei Riemenscheiben jeweils eine konische Grundform aufweisen mit Riemenlaufflächen, die auf den axial voneinander abgewandten Außenseiten der Riemenscheiben in Richtung der Längsachse kegelförmig zusammenlaufen. Die Riemenlaufflächen, auch kurz Laufflächen genannt, bezeichnen die Umfangsflächen der Riemenscheiben, auf denen der Riemen mit seiner Innenseite aufliegt, die am Innenumfang der geschlossenen, beide Riemenscheiben umschlingenden Riemenschleife befindet. Bei dem erfindungsgemäßen Schrägriementrieb ist die Innenseite des Riemens entsprechend dem Neigungswinkel zur Längsachse ebenfalls gegen die Riemenscheiben geneigt. Dadurch, dass die Riemenlaufflächen um diesen Neigungswinkel gegen die Senkrechte geneigt sind, kann der schräg umlaufende Riemen die Riemenlauffläche jeweils über die gesamte Breite seiner Innenfläche kontaktieren, wodurch eine effiziente und sichere Kraft- und Momentübertragung zwischen Riemen und Riemenscheiben gewährleistet ist.

Bei einem Riemenscheibenpaar des erfindungsgemäßen Schrägriementriebs fallen die Riemenlaufflächen jeder Riemenscheibe axial in Richtung der Längsachse nach außen ab, d.h. laufen axial konisch zusammen, wobei die Außenseite durch die der jeweils anderen Riemenscheibe des Riemenscheibenpaars axial abgewandten Seite definiert ist. Mit anderen Worten wird eine - abgesehen vom unterschiedlichen Durchmesser - bezüglich einer senkrecht zur Längsachse stehenden Querebene spiegelsymmetrische Anordnung der Riemenlaufflächen beider Riemenscheiben bereitgestellt, welche mit dem schrägen Verlauf der Trume bzw. der Riemenebene korrespondiert. Beispielsweise können die Riemenlaufflächen für einen einfachen Flachriemen eine kegelmantelförmige Grundform haben. In der erfindungsgemäßen axialen Anordnung werden die Laufflächen eines Riemenscheibenpaars durch eine Umhüllung in Form eines Doppelkegels begrenzt, und der Riemen läuft geneigt zur Kegelachse außen um beide Kegelflächen. Durch die an die Neigung des Riemens angepasste konische Grundform kann die Torsion des Riemens reduziert werden, so dass die Walkbewegung kleiner ist und die Belastung des Riemens verringert wird.

Zur Erhöhung der Betriebssicherheit können die Laufflächen - wie dies an sich von Riementrieben bekannt ist - nach außen konvex ballig geformt sein, sprich eine Bombierung aufweisen. Dadurch erfolgt eine selbstständige Ausrichtung und Zentrierung des Riemens auf der Riemenlauffläche beim Umlauf um die Riemenscheiben. Alternativ oder zusätzlich können die Riemenscheibe eine oder zwei Bordscheiben oder bordscheibenartige Abschnitte aufweisen, die ein Wandern des Riemens im Betrieb begrenzen.

Es kann vorgesehen sein, dass der Riementrieb einen Flachriemen und/oder einen Keilriemen und/oder einen Zahnriemen aufweist. Wenn der Riemen ein Flachriemen ist, kann eine konstruktiv besonders einfache Realisierung der Riemenscheibe in Form eines Kegelrads erfolgen, bei der die Riemenlaufflächen eine einfache konische oder kegelmantelförmige Grundform haben, die einen geringen Konstruktions-, Fertigungs- und Montageaufwand erfordert. Durch eine gegebenenfalls ballig-konvexe Ausgestaltung wird der Aufwand nicht erhöht.

Alternativ kann ein Riemen als Keilriemen ausgebildet sein. Erfindungsgemäß weisen die Riemenscheiben mit dem Riemenquerschnitt korrespondierende Keilnuten auf. Diese Keilnuten haben an sich bereits einen keilförmigen Nutquerschnitt mit kegelförmigen Seitenflanken, die jedoch nicht die konische Anordnung der Riemenlaufflächen betreffen. Erfindungsgemäß kann es nämlich vorteilhafter sein, dass der keilförmige Nutquerschnitt als Ganzes korrespondierend mit dem Neigungswinkel des Riemens bzw. der Trume relativ zur Längsachse geneigt ist. Auf diese Weise können die bekannten vorteilhaften Übertragungseigenschaften von Keilriemen, wie hoher Wirkungsgrad und schlupfarme Übertragung, für den erfindungsgemäßen Schrägriementrieb genutzt werden.

Dadurch, dass ein Riemen als Zahnriemen ausgebildet ist, erfolgt eine praktisch schlupffreie, formschlüssige Kraft- und Momentübertragung mit hohem Wirkungsgrad, auch von relativ hohen Drehmomenten. Die kommt einer kompakten Bauform in einer Lenksäule zugute.

Es ist denkbar und möglich, dass der Riementrieb zwei- oder mehrstufig ausgebildet ist. Dabei kann jede einzelne Getriebestufe eines Riemengetriebes durch einen erfindungsgemäßen Schrägriementrieb mit einem Riemenscheibenpaar gebildet sein. Zwei oder mehr solcher Schrägriementriebe können zur Bildung eines mehrstufigen Riemengetriebes in axialer Richtung kaskadiert sein, wobei sämtliche Riemenräder koaxial auf der Längsachse angeordnet sind. Neben dem einfachen und kompakten Aufbau ist ein weiterer Vorteil des mehrstufigen Riementriebs, dass für eine geforderte Gesamtübersetzung das Übersetzungsverhältnis jeder einzelnen Stufe geringer sein kann, wodurch Riemenscheiben mit kleineren Durchmessern eingesetzt werden können, wodurch eine vorteilhafte kleinere radiale Abmessung realisierbar ist.

Zur Realisierung eines mehrstufigen Riemengetriebes kann es vorteilhaft sein, dass zwischen der Motorwelle und der Lenkwelle mindestens eine Zwischenwelle angeordnet ist, die zwei drehfest verbundene, koaxiale (bezogen auf die Zwischenwellenachse) Riemenscheiben aufweist. Dabei bildet die mit der Motorwelle verbundene, antriebsseitige Antriebs- oder Motor-Riemenscheibe mit der antriebs- bzw. motorseitigen Riemenscheibe der Zwischenwelle, also einer ersten Zwischen-Riemenscheibe, ein erfindungsgemäßes, durch einen schrägen Riemen gekoppeltes Riemenscheibenpaar. Die abtriebs- bzw. lenkwellenseitige Riemenscheibe der Zwischenwelle, auch als zweite Zwischen-Riemenscheibe bezeichnet, bildet zusammen mit der lenkwellenseitigen Abtriebs- oder Lenkwellen-Riemenscheibe eine weitere erfindungsgemäß ausgestaltete Getriebestufe. Dabei haben die beiden Riemenscheiben der Zwischenwelle unterschiedliche Durchmesser, die gemäß der angestrebten Gesamtübersetzung angepasst sind an die Durchesser von Motor- und Lenkwellen-Riemenscheiben.

In einer vorteilhaften Weiterbildung kann es vorgesehen sein, dass die Zwischenwelle koaxial oder winklig zur Motorwelle und/oder der Lenkwelle angeordnet ist. Mit anderen Worten kann die Zwischenwelle koaxial zur Motorwelle oder zur Lenkwelle angeordnet sein, oder die Zwischenwelle kann koaxial zur Motorwelle und zur Lenkwelle angeordnet sein, oder die Zwischenwelle ist winklig zur Motorwelle oder zur Lenkwelle angeordnet oder die Zwischenwelle ist winklig zur Motorwelle und zur Lenkwelle angerordnet.

Durch Einsatz einer Zwischenwelle kann ein zwei- oder mehrstufiges Riemengetriebe realisiert sein. Es ist auch möglich, weitere, ebenfalls koaxiale Zwischenwellen zur Bildung weiterer Getriebestufen vorzusehen, die über erfindungsgemäße Schrägriementriebe miteinander verbunden sein können.

Für einen sicheren, schlupfarmen und ruhigen Lauf kann es vorteilhaft sein, dass eine Spanneinrichtung zur Spannung des Riemens vorgesehen ist. Dadurch wird erreicht, dass unabhängig vom Belastungszustand in den Trumen eine Grundspannung in Riemenrichtung aufrecht erhalten wird.

Es kann vorgesehen sein, dass die Spanneinrichtung ein Spannmittel aufweist, welches mindestens einen Trum des Riemens quer zur Erstreckung des Riemens mit einer Spannkraft belastet. Dadurch, dass mittels eines Spannmittels, wie beispielsweise einer drehbar gelagerten Andruckrolle, von außen oder von innen auf den einen Trum eine Andruckkraft quer aufgebracht wird, also parallel zu der oben definierten Trum- oder Riemenebene, bevorzugt im mittleren Bereich des frei verlaufenden Riemens, wird eine Längskraft im Trum erzeugt und der Riemen zwischen den Riemenlaufflächen gespannt. Beispielsweise kann das Spannmittel elastisch angedrückt werden, beispielsweise mittels eines vorgespannten Federelements als federbelastete Andruckrolle, die bevorzugt außen, oder innen, auf dem Riemen abrollen kann, oder eine Gleitkufe, die auf dem Riemen gleiten kann. Es ist möglich, nur den einen Trum, also den Last- oder den Leertrum, in Richtung gegen den anderen Trum zu belasten, oder auch beide Trume zwischen zwei gegeneinander gerichteten Spannmitteln zusammen zu drücken. Dadurch ist es auch mit Vorteil möglich, den Umschlingungswinkel und damit die Länge der Riemenlauffläche, auf welcher der Riemen die Riemenscheiben kontaktiert, zu vergrößern. Dadurch kann das übertragbare Moment und damit die übertragbare Leistung erhöht werden.

Anstelle oder zusätzlich zur elastischen Vorspannung kann das Spannmittel einstellbar ausgestaltet sein, beispielsweise mittels einer Stellschraube gegen den Trum definiert so weit angedrückt werden, bis die erforderliche Riemenspannung erreicht ist.

Weiterhin besteht die Möglichkeit, dass Führungsmittel vorgesehen sind, welche den Riemen in einer definierten Lage bezüglich der Riemenlaufflächen zu halten oder zu stützen. Beispielsweise können die Führungsmittel einen der oder beide Trume seitlich stützen, so dass deren Lage und Orientierung bezüglich der Riemenscheiben gleichbleibt.

Es ist denkbar und möglich, dass die Spanneinrichtung Führungsmittel aufweist. Beispielsweise kann eine Andruckrolle radial vorstehende Vorsprünge oder Spurkränze haben, zwischen denen der Riemen im Trum geführt hindurchlaufen kann. Die Führungsmittel können auch unabhängig von einer Spanneinrichtung ausgeführt sein, beispielsweise als seitliche Begrenzungselemente, welche Gleitflächen, Führungsrollen oder dergleichen aufweisen, welchen den Bewegungsraum des Riemens quer zu seiner Längserstreckung begrenzen.

Die Erfindung betrifft weiterhin eine Lenksäule für ein Kraftfahrzeug, umfassend eine an einer Kraftfahrzeugkarosserie anbringbare Manteleinheit, in der eine Lenkwelle um ihre in Längsrichtung erstreckte Längsachse drehbar gelagert ist, an der ein Lenkrad anbringbar ist, und die mit einem Feedback-Aktuator verbunden ist, der einen Elektromotor und einen Riementrieb aufweist, zur Erzeugung und Einkopplung eines Feedback-Moments in die Lenkwelle, bei welcher der Feedback-Aktuator ausgebildet ist gemäß einer oder mehrerer der oben beschriebenen Ausgestaltungen.

Durch die erfindungsgemäß mögliche schlanke Bauform mit relativ geringer radialer Abmessung kann ein Feedback-Aktuator mit Riementrieb mit relativ geringem Fertigungs- und Montageaufwand in eine kompakte, wenig Bauvolumen beanspruchende Lenksäule integriert werden. Der gewichtssparende Riementrieb ist vorteilhaft für eine energiesparende Leichtbauweise. Dabei wird der Riementrieb-spezifische geräuscharme Betrieb und ruckfreie und sanfte Übertragung des Feedback-Moments als haptisch besonders angenehm empfunden.

Bevorzugt kann der Feedback-Aktuator an der Manteleinheit angebracht sein, vorzugsweise in einem Mantelrohr oder Führungskasten integriert. Vorteil dabei ist eine kompakte und geschützte Unterbringung im Fahrzeuginnenraum.

Eine vorteilhafte Ausgestaltung kann vorsehen, dass der Feedback-Aktuator in einem relativ zur Manteleinheit in einem in Längsrichtung verstellbaren Innenmantel angeordnet ist. Eine längsverstellbare Lenksäule weist eine Manteleinheit auf mit einem Außenmantel, auch äußeres Mantelrohr oder Führungskasten genannt, in dem ein Innenmantel, auch inneres Mantelrohr genannt, in Längsrichtung, d.h. in Richtung der Längsachse teleskopartig verstellbar aufgenommen ist. In dem Innenmantel ist die Lenkwelle oder-spindel gelagert, an deren hinteren, fahrerseitigen Ende das Lenkrad angebracht ist. Durch die vorteilhafte Bauform kann der erfindungsgemäße Feedback-Aktuator auch in einem relativ kleinvolumigen Innenmantel vollständig integriert sein. Dies ermöglicht eine größere Designfreiheit bei der Gestaltung von kompakt verstaubaren Lenksäule für autonom fahrende Fahrzeuge, wobei eine platzsparende Unterbringung der Lenksäule im autonomen Fahrbetrieb ermöglicht wird.

Es kann vorgesehen sein, dass die Manteleinheit von einer mit der Karosserie des Kraftfahrzeugs verbindbaren Trageinheit gehalten ist. Durch die teleskopartige Verstellung der inneren und äußeren Mäntel kann eine Längsverstellung in Richtung der Längsachse der Lenkspindel realisiert werden.

Es ist möglich, dass die Manteleinheit relativ zur Trageinheit in Höhenrichtung verstellbar ist. Eine derartige Höhenverstellung kann beispielsweise in an sich bekannter Weise dadurch realisiert sein, dass ein Außenmantel lenkradfernen, in Fahrtrichtung vorderen Bereich um eine horizontale, quer zur Längsrichtung angeordnete Schwenkachse an der Trageinheit nach oben und unten schwenkbar gelagert ist. Dadurch kann das hinten an der Lenkspindel angebrachte Lenkrad im Fahrzeuginnenraum in der Höhe verstellt werden.

Längs- und Höhenverstellung können bedarfsweise einzeln oder in Kombination vorgesehen sein. Dabei kann die Verstellung manuell erfolgen, oder mittels motorischer Verstellantriebe.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: einen erfindungsgemäßen Feedback-Aktuator der Lenksäule gemäß Figur 1 in einer schematisch freigestellten perspektivischen Ansicht,
- Figur 3: einen Längsschnitt durch den erfindungsgemäßen Riementrieb des Feedback-Aktuators gemäß Figur 2, und
- Figur 4: einen Längsschnitt durch einen erfindungsgemäßen Riementrieb des Feedback-Aktuators in einer weiteren Ausführungsvariante.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

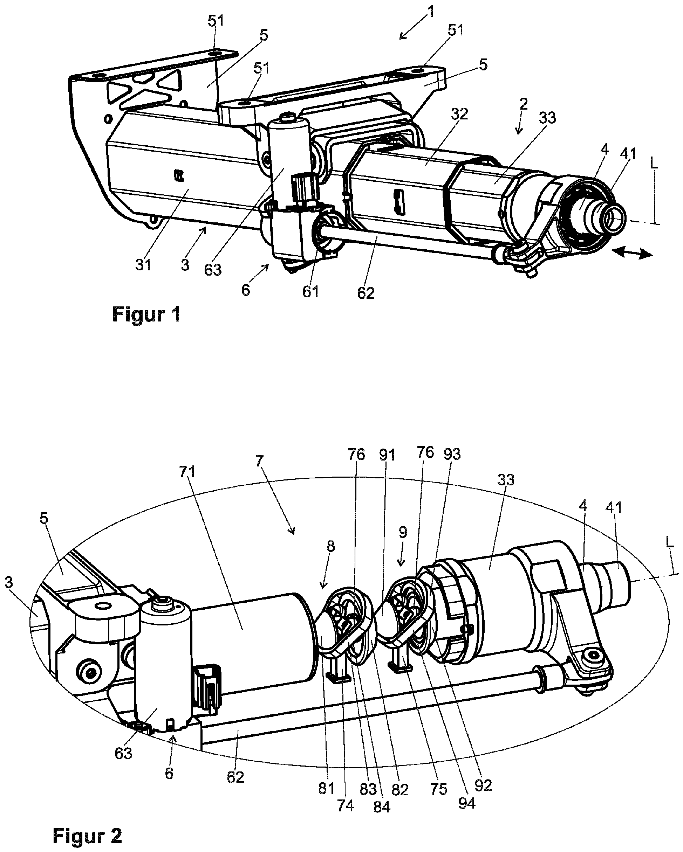

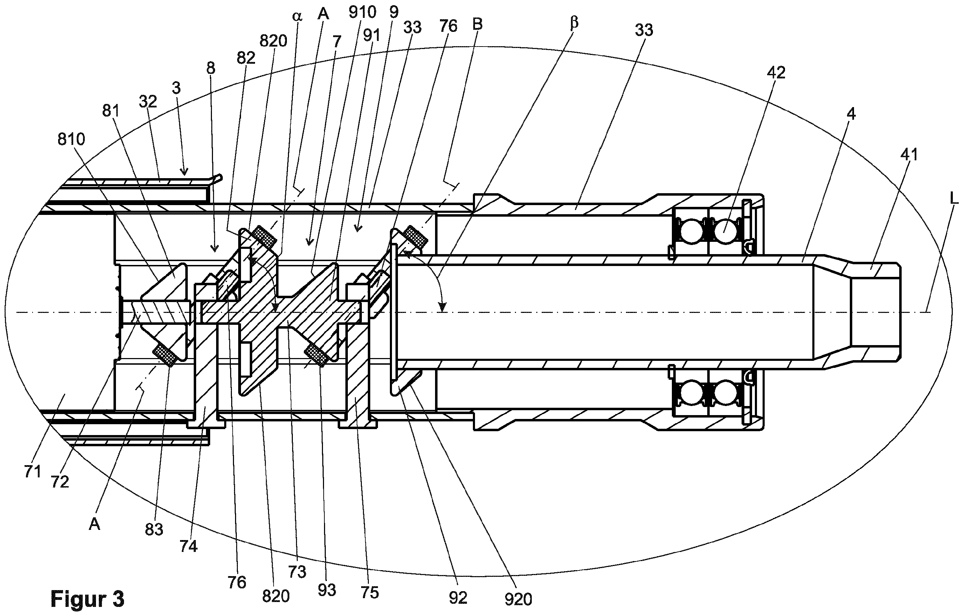

Figur 1 zeigt eine erfindungsgemäße Lenksäule 1 in einer perspektivischen Ansicht bezüglich der Fahrtrichtung von schräg hinten. Figur 2 zeigt eine teilweise aufgeschnittene bzw. freigelegte Teilansicht der Lenksäule 1, und Figur 3 einen teilweisen Längsschnitt.

Die Lenksäule 1 weist eine Stelleinheit 2 auf. Die Stelleinheit 2 umfasst eine Manteleinheit 3 mit drei Mantelrohren 31, 32, 33, nämlich einem Außenmantelrohr 31, einem Zwischenmantelrohr 32 und einem Innenmantelrohr 33. Die Mantelrohre 31, 32 und 33 sind koaxial ineinander angeordnet und in Längsrichtung, dies entspricht der Richtung einer Längsachse L, teleskopierend verschiebbar, wodurch eine Längsverstellung ermöglicht ist, wie mit dem Doppelpfeil angedeutet. Die Mantelrohre 31, 32, 33 können zur Verkürzung der Lenksäule 1 bis in eine Verstauposition maximal in Längsrichtung zusammengeschoben, d.h. eingefahren werden, und umgekehrt aus der Verstauposition in Richtung einer Bedienposition ausgefahren werden.

Alternativ kann eine lediglich zweiteilige Teleskopanordnung aus einem Außenmantelrohr 31 und einem Innenmantelrohr 33 gebildet sein, also ohne ein dazwischen eingefügtes Zwischenmantelrohr 32. In einer anderen Alternative können ein oder mehr weitere Zwischenmantelrohre 32 eingefügt sein, zur Bildung eines Mehrfach-Teleskops.

In der Manteleinheit 3 ist um die Längsachse L drehbar eine Lenkspindel 4 gelagert, auch als Lenkwelle 4 bezeichnet, die an ihrem hinteren Ende einen Anschlussabschnitt 41 zur Anbringung eines nicht dargestellten Lenkrads aufweist.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Zur motorischen Längsverstellung ist ein Verstellantrieb 6 vorgesehen, der einen Spindeltrieb mit einer Spindelmutter 61 und einer darin eingeschraubten Gewindespindel 62 aufweist, die von einem elektrischen Motor 63 relativ zueinander drehend antreibbar sind. Dadurch ist ein Tauchspindelantrieb realisiert.

Die Gewindespindel 62 erstreckt sich parallel zur Längsachse L und ist mit dem Innenmantelrohr 33 verbunden. Die Spindelmutter 61 stützt sich über den Verstellantrieb 6 in Längsrichtung an dem Außenmantelrohr 31 ab. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung entweder in das Außenmantelrohr 31 eingefahren oder entgegengesetzt in einer Ausfahrrichtung aus dem Außenmantelrohr 31 ausgefahren werden kann. Dadurch kann ein an dem Anschlussabschnitt 41 angebrachtes Lenkrad wahlweise nach vorn in eine Verstauposition, in der das Innenmantelrohr 33 und das Zwischenmantelrohr 32 in das Außenmantelrohr 31 eingefahren, d.h. nach vorn versenkt sind, oder nach hinten in eine Bedienposition gebracht werden kann, in der die Mantelrohre 31, 32 und 33 auseinander ausgefahren sind.

Alternativ kann sich die Spindelmutter 61 an dem Innenmantelrohr 33, und die Gewindespindel 62 an dem Außenmantelrohr 31 abstützen.

Alternativ ist es möglich, durch einen drehenden Antrieb der Gewindespindel 62 und eine feststehend an einem Mantelrohr angebrachte Spindelmutter 61 einen Rotationsspindelantrieb auszubilden.

Figur 2 zeigt eine perspektivische Teilansicht der Lenksäule 1 wobei die das Innenmantelrohr 33 schematisch durchscheinend dargestellt bzw. weggelassen ist, so dass der Blick ins Innere freigegeben wird. In Figur 3 ist ein Längsschnitt durch die in Figur 2 gezeigte Anordnung entlang der Längsachse L gezeigt.

In dem Innenmantelrohr 33 ist ein erfindungsgemäßer, riemengetriebener Feedback-Aktuator 7 angeordnet, der erfindungsgemäß einen ersten Riementrieb 8 und einen zweiten Riementrieb 9 umfasst, die gleichartig aufgebaut und als Getriebestufen eines Riemengetriebes antriebsmäßig in Reihe geschaltet sind. Über die Riementriebe 8 und 9 ist die Motorwelle 72 zur Einkopplung des Feedback-Moments mit der Lenkwelle 4 verbunden, die in einer Lageranordnung 42 in dem Innenmantelrohr 33 um die Längsachse L drehbar gelagert ist

Der Feedback-Aktuator 7 weist einen elektrischen Motor 71 auf, der in dem Innenmantelrohr 33 befestigt ist und eine zur Längsachse L koaxiale, wahlweise in beide Drehrichtungen drehend antreibbare Motorwelle 72 aufweist. Auf der Motorwelle 72 ist - ebenfalls koaxial zur Längsachse L - eine erste Riemenscheibe 81 befestigt. Diese ist kegelförmig ausgebildet mit einer außen umlaufenden Riemenlauffläche 810, die motorseitig konisch in Richtung der Längsachse L zusammenläuft.

Eine Zwischenwelle 73 ist von der Motorwelle 72 axial beabstandet, d.h. mit Abstand in der durch die Längsachse L vorgegebenen Längsrichtung, in zwei an dem Innenmantelrohr 33 angebrachten Lagerträgern 74 und 75 koaxial um die Längsachse L drehbar gelagert.

Auf der Zwischenwelle 73 ist drehfest - koaxial zur Längsachse L - eine zweite Riemenscheibe 82 fixiert, beispielsweise wie dargestellt durch eine einstückige Ausbildung mit der Zwischenwelle 82, beispielsweise als Kunststoff-Spritzgussteil, oder spanend oder gusstechnisch aus Metall gefertigt. Diese ist kegelförmig ausgebildet mit einer außen umlaufenden Riemenlauffläche 820, die lenkwellenseitig konisch in Richtung der Längsachse L zusammenläuft, also bezüglich der konischen Form der Riemenlauffläche 810 der Riemenscheibe 81 spiegelbildlich zu einer Querebene der Längsachse L.

Die beiden Riemenscheiben 81 und 82 sind zur Bildung des Riementriebs 8 von einem Riemen 83 umschlungen, der für eine Drehmomentübertragung sorgt und als Flachriemen ausgebildet ist. Der Riemen 83 liegt reibschlüssig auf den Riemenlaufflächen 810 und 820 an. Die Riemenscheibe 81 hat einen kleineren Durchmesser als die Riemenscheibe 82, wodurch das Übersetzungsverhältnis des Riementriebs 8 bestimmt wird.

Die zwischen den beiden Riemenscheiben 81 und 82 durch die freien Riemenabschnitte gebildeten Trume verlaufen parallel zu einer Trumebene A des ersten Riementriebs 8, die in Figur 3 gestrichelt eingezeichnet ist und auch als Riemenebene A bezeichnet wird. Der Riemen 83 erstreckt sich in einer geschlossenen, um die die Riemenscheiben 81 und 82 umlaufenden Riemenschleife, die parallel zur Trum- oder Riemenebene A liegt.

Erfindungsgemäß steht die Trumebene A schräg zur Längsachse L, also in einem vom rechten Winkel abweichenden Neigungswinkel α (alpha) kleiner als 90° größer als 0°, bevorzugt in einem Bereich zwischen 20° bis 70°, besonders bevorzugt zwischen 30° und 60°.

Der Neigungswinkel α wird bestimmt durch den axialen Abstand der beiden Riemenscheiben 81 und 82 sowie deren Durchmesser.

Die Riemenlaufflächen 810 und 820 sind derart entsprechend der Neigung α der Trumebene A konisch zur Längsachse geneigt, so dass der Riemen 83 darauf senkrecht zur Trumebene A anliegt. Entsprechend ist die Riemenlauffläche 810 um (α+90°) geneigt, und die andere Riemenlauffläche 820 um (α-90°).

Auf der Zwischenwelle 73 ist drehfest - koaxial zur Längsachse L - mit Abstand zur Riemenscheibe 82 eine dritte Riemenscheibe 91 fixiert, beispielsweise wie dargestellt durch eine einstückige Ausbildung zusammen mit der Zwischenwelle 82 und der zweiten Riemenscheibe 82, beispielsweise als Kunststoff-Spritzgussteil, oder spanend oder gusstechnisch aus Metall gefertigt.

Die dritte Riemenscheibe 91 ist kegelförmig ausgebildet mit einer außen umlaufenden Riemenlauffläche 910, die wie bei der ersten Riemenscheibe 81 motorseitig konisch in Richtung der Längsachse L zusammenläuft.

Mit axialem Abstand zur Riemenscheibe 91 ist auf der Lenkwelle 4 eine vierte Riemenscheibe 92 fixiert, die kegelförmig ausgebildet ist mit einer außen umlaufenden Riemenlauffläche 920, die wie bei der zweiten Riemenscheibe 82 lenkwellenseitig konisch in Richtung der Längsachse L zusammenläuft, also bezüglich der konischen Form der Riemenlauffläche 910 der Riemenscheibe 91 spiegelbildlich zu einer Querebene der Längsachse L.

Die beiden Riemenscheiben 91 und 92 sind zur Bildung des Riementriebs 9 von einem Riemen 93 umschlungen, der für eine Drehmomentübertragung sorgt und als Flachriemen ausgebildet ist. Der Riemen 93 liegt reibschlüssig auf den Riemenlaufflächen 910 und 920 an.

Die Riemenscheibe 91 hat einen kleineren Durchmesser als die Riemenscheibe 92, wodurch das Übersetzungsverhältnis des zweiten Riementriebs 9 bestimmt wird.

Die zwischen den beiden Riemenscheiben 91 und 92 durch die freien Riemenabschnitte gebildeten Trume verlaufen parallel zu einer Trumebene B des zweiten Riementriebs 9, die in Figur 3 gestrichelt eingezeichnet ist und auch als Riemenebene B bezeichnet wird. Der Riemen 93 erstreckt sich in einer geschlossenen, um die die Riemenscheiben 91 und 92 umlaufenden Riemenschleife, die parallel zur Trum- oder Riemenebene B liegt.

Erfindungsgemäß steht die Trumebene B schräg zur Längsachse L, also in einem vom rechnet Winkel abweichenden Neigungswinkel β (beta) kleiner als 90° größer als 0°, bevorzugt in einem Bereich zwischen 20° bis 70°, besonders bevorzugt zwischen 30° und 60°.

Der Neigungswinkel β wird bestimmt durch den axialen Abstand der beiden Riemenscheiben 91 und 92 sowie deren Durchmesser.

Die Riemenlaufflächen 910 und 920 sind derart entsprechend der Neigung β der Trumebene B konisch zur Längsachse L geneigt, so dass der Riemen 93 darauf senkrecht zur Trumebene B anliegt. Entsprechend ist die Riemenlauffläche 910 um (β+90°) geneigt, und die andere Riemenlauffläche 920 um (β-90°).

Das Gesamt-Übersetzungsverhältnis des Riemengetriebes zwischen der Motorwelle 72 und der Lenkwelle 4 ergibt sich aus dem Produkt der Übersetzungsverhältnisse der beiden Riementriebe 8 und 9.

Bei Bedarf können auch weitere Zwischenwellen vorgesehen sein, welche dann ebenfalls axial zwischen der Motorwelle 72, der Lenkwelle 4 und den weiteren Zwischenwellen 73 angeordnet sein können.

Für jeden der beiden Riementriebe 8 und 9 kann eine Spanneinrichtung vorgesehen sein, mit jeweils mindestens einem Spannmittel, welches quer zur Erstreckung des Riemens 83 oder 93 eine Andruckkraft ausübt, welches die beiden Trume gegeneinander oder auch voneinander weg belastet, so dass eine Riemenspannung erzeugt werden kann. Eine Spanneinrichtung kann beispielsweise eine gegen den Riemen 83 oder 93 federbelastete Andruckrolle 76 aufweisen.

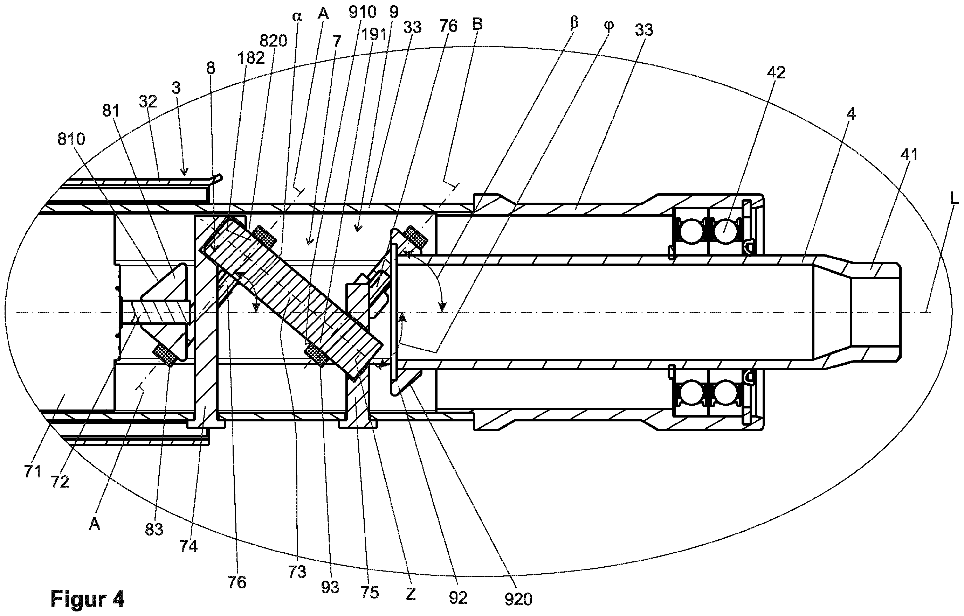

In der Figur 4 ist ein Längsschnitt durch einen erfindungsgemäßen Riementrieb des Feedback-Aktuators in einer weiteren Ausführungsvariante dargestellt, wobei diese eine zur Motorwelle 72 und zur Lenkwelle 4 winklig in einem Winkel <P angeordnete Zwischenwelle 73 aufweist. Die Riemenscheiben 182, 191 sind einstückig mit der Zwischenwelle 73 ausgebildet, wobei die Riemenscheibe 182 mit der Riemenscheibe 81 ein Riemenscheibenpaar bildet, und wobei die Riemenscheibe 182 winklig zur Riemenscheibe 81 angeordnet ist, sprich die Rotationsachse der Riemenscheibe 182, die der Zwischenwellenachse Z entspricht, ist winklig zur Rotationsachse der Riemenscheibe 81 angeordnet, die der Längsachse L bzw. der Motorwellenachse entspricht.

Die Riemenscheibe 191 bildet mit der Riemenscheibe 92 ein Riemenscheibenpaar, wobei die Riemenscheibe 191 winklig zur Riemenscheibe 92 angeordnet ist, sprich die Rotationsachse der Riemenscheibe 191, die der Zwischenwellenachse Z entspricht, ist winklig zur Rotationsachse der Riemenscheibe 92, die der Längsachse L entspricht.

Die Riemenscheibe 182 weist einen Riemenlauffläche 820 auf und die Riemenscheibe 191 weist eine Riemenlauffläche 910 auf, die jeweils mit dem entsprechenden Riehmen 83, 93 in Wirkeingriff stehen.

Die Zwischenwelle 73 ist drehbar in den Lagerträgern 74, 75 gehaltert und gegen eine Verlagerung in Richtung der Zwischenwellenachse Z an dem jeweiligen Lagerträger 74, 75 abgestützt.

Sämtliche zur Figur 3 gemachten Ausführungen lassen sich im Wesentlichen mutatis mutandis auf die Figur 4 übertragen und werden daher nicht erneut ausgeführt.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 4: Lenkspindel (Lenkwelle)
- 41: Anschlussabschnitt
- 42: Lageranordnung
- 5: Trageinheit
- 51: Befestigungsmittel
- 6: Verstellantrieb
- 61: Spindelmutter
- 62: Gewindespindel
- 63: Motor
- 7: Feedback-Aktuator
- 71: Motor
- 72: Motorwelle
- 73: Zwischenwelle
- 74, 75: Lagerträger
- 76: Andruckrolle
- 8, 9: Riementrieb
- 81,91: Riemenscheibe
- 82,92: Riemenscheibe
- 810, 820: Riemenlauffläche
- 910, 920: Riemenlauffläche
- 83, 93: Riemen

- L: Längsachse
- A, B: Trumebene (Riemenebene)
- α, β: Neigungswinkel
- ϕ: Winkel

## Patentansprüche

1. Feedback-Aktuator (7) für eine Lenkeinrichtung eines Kraftfahrzeugs, umfassend eine um eine in Längsrichtung erstreckte Längsachse (L) drehbar gelagerte Lenkwelle (4), die mit der Motorwelle (72) eines elektrischen Motors (71) über einen Riementrieb (8, 9) drehend antreibbar gekuppelt ist, der mindestens ein Riemenscheibenpaar mit zwei von einem Riemen (83, 93) umschlungenen Riemenscheiben (81, 82, 91, 92) aufweist, von denen eine mit der Motorwelle (72) und eine mit der Lenkwelle (4) wirkverbunden ist,
**dadurch gekennzeichnet,**
**dass** die zwei Riemenscheiben (81, 82, 91, 92, 182, 191) des Riemenscheibenpaars koaxial zueinander oder winklig zueinander angeordnet sind.

2. Feedback-Aktuator (7) nach Anspruch 1, **dadurch gekennzeichnet, dass** der Riemen (83, 93) parallel zu einer Riemenebene (A, B) angeordnet ist, die schräg relativ zur Längsachse (L) angeordnet ist.

3. Feedback-Aktuator (7) nach einem der vorangehenden Ansprüche, **dadurch gekennzeichnet, dass** die zwei Riemenscheiben (81, 82, 91, 92) jeweils eine konische Grundform aufweisen mit Riemenlaufflächen (810, 820, 910, 920, die auf den axial voneinander abgewandten Außenseiten der Riemenscheiben (81, 82, 91, 92) in Richtung der Längsachse (L) kegelförmig zusammenlaufen.

4. Feedback-Aktuator (7) nach einem der vorangehenden Ansprüche, **dadurch gekennzeichnet, dass** der Riementrieb (8, 9) einen Flachriemen (83, 93) und/oder einen Keilriemen und/oder einen Zahnriemen aufweist.

5. Feedback-Aktuator (7) nach einem der vorangehenden Ansprüche, **dadurch gekennzeichnet, dass** der Riementrieb (8, 9) zwei- oder mehrstufig ausgebildet ist.

6. Feedback-Aktuator (7) nach einem der vorangehenden Ansprüche, **dadurch gekennzeichnet, dass** zwischen der Motorwelle (72) und der Lenkwelle (4) mindestens eine Zwischenwelle (73) angeordnet ist, die zwei drehfest verbundene, koaxiale Riemenscheiben (82, 91) aufweist.

7. Feedback-Aktuator (7) nach Anspruch 6, **dadurch gekennzeichnet, dass** die Zwischenwelle (73) koaxial oder winklig zur Motorwelle (72) und/oder der Lenkwelle (4) angeordnet ist.

8. Feedback-Aktuator (7) nach einem der vorangehenden Ansprüche, **dadurch gekennzeichnet, dass** eine Spanneinrichtung (76) zur Spannung des Riemens (83, 93) vorgesehen ist.

9. Feedback-Aktuator (7) nach Anspruch 8, **dadurch gekennzeichnet, dass** die Spanneinrichtung ein Spannmittel (76) aufweist, welches mindestens einen Trum des Riemens (83, 93) quer zur Erstreckung des Riemens (83, 93) mit einer Spannkraft belastet.

10. Lenksäule (7) für ein Kraftfahrzeug, umfassend eine an einer Kraftfahrzeugkarosserie anbringbare Manteleinheit (3), in der eine Lenkwelle (4) um ihre in Längsrichtung erstreckte Längsachse (L) drehbar gelagert ist, an der ein Lenkrad anbringbar ist, und die mit einem Feedback-Aktuator (7) verbunden ist, der einen Elektromotor (71) und einen Riementrieb (8, 9) aufweist, zur Erzeugung und Einkopplung eines Feedback-Moments in die Lenkwelle (4),
**dadurch gekennzeichnet,**
**dass** der Feedback-Aktuator (7) ausgebildet ist gemäß einem der Ansprüche 1 bis 9.

11. Lenksäule nach Anspruch 10, **dadurch gekennzeichnet, dass** der Feedback-Aktuator (7) in einem relativ zur Manteleinheit (3) in einem in Längsrichtung verstellbaren Innenmantel (33) angeordnet ist.

## Claims

1. Feedback actuator (7) for a steering device of a motor vehicle, comprising a steering shaft (4) which is mounted rotatably about a longitudinal axis (L) extending in the longitudinal direction and which is coupled rotatably drivably to the motor shaft (72) of an electric motor (71) via a belt drive (8, 9), which has at least one pair of belt pulleys with two belt pulleys (81, 82, 91, 92) around which a belt (83, 93) is wound, one of which is operatively connected to the motor shaft (72) and one of which is operatively connected to the steering shaft (4),
**characterised in**
**that** the two pulleys (81, 82, 91, 92, 182, 191) of the pair of pulleys are arranged coaxially to one another or at an angle to one another.

2. Feedback actuator (7) according to claim 1, **characterised in that** the belt (83, 93) is arranged parallel to a belt plane (A, B) which is arranged obliquely relative to the longitudinal axis (L).

3. Feedback actuator (7) according to one of the preceding claims, **characterised in that** the two belt pulleys (81, 82, 91, 92) each have a conical basic shape with belt running surfaces (810, 820, 910, 920) which converge in a conical shape on the axially opposite outer sides of the belt pulleys (81, 82, 91, 92) in the direction of the longitudinal axis (L).

4. Feedback actuator (7) according to one of the preceding claims, **characterised in that** the belt drive (8, 9) has a flat belt (83, 93) and/or a V-belt and/or a toothed belt.

5. Feedback actuator (7) according to one of the preceding claims, **characterised in that** the belt drive (8, 9) is designed with two or more stages.

6. Feedback actuator (7) according to one of the preceding claims, **characterised in that** at least one intermediate shaft (73) is arranged between the motor shaft (72) and the steering shaft (4) and has two coaxial belt pulleys (82, 91) which are connected in a rotationally fixed manner.

7. Feedback actuator (7) according to claim 6, **characterised in that** the intermediate shaft (73) is arranged coaxially or at an angle to the motor shaft (72) and/or the steering shaft (4).

8. Feedback actuator (7) according to one of the preceding claims, **characterised in that** a tensioning device (76) is provided for tensioning the belt (83, 93).

9. Feedback actuator (7) according to claim 8, **characterised in that** the tensioning device has a tensioning means (76) which loads at least one strand of the belt (83, 93) transversely to the extension of the belt (83, 93) with a tensioning force.

10. Steering column (7) for a motor vehicle, comprising a jacket unit (3) which can be attached to a motor vehicle body and in which a steering shaft (4) is mounted rotatably about its longitudinal axis (L) extending in the longitudinal direction and to which a steering wheel can be attached, and which is connected to a feedback actuator (7) which has an electric motor (71) and a belt drive (8, 9), for generating and coupling a feedback torque into the steering shaft (4),
**characterised in**
**in that** the feedback actuator (7) is designed in accordance with one of claims 1 to 9.

11. Steering column according to claim 10, **characterised in that** the feedback actuator (7) is arranged in an inner casing (33) which is adjustable in the longitudinal direction relative to the casing unit (3).

## Revendications

1. Actionneur à rétroaction (7) pour un dispositif de direction d'un véhicule automobile, comprenant un arbre de direction (4) logé de manière à pouvoir tourner autour d'un axe longitudinal (L) s'étendant dans le sens de la longueur, lequel arbre est relié à l'arbre moteur (72) d'un moteur électrique (71) par un entraînement à courroie (8, 9), qui présente au moins une paire de poulies avec deux poulies (81, 82, 91, 92) entourées d'une courroie (83, 93), dont l'une est reliée fonctionnellement à l'arbre du moteur (72) et l'autre à l'arbre de direction (4),
**caractérisé en**
**ce que** les deux poulies (81, 82, 91, 92, 182, 191) de la paire de poulies sont disposées coaxialement l'une par rapport à l'autre ou en formant un angle l'une par rapport à l'autre.

2. Actionneur à rétroaction (7) selon la revendication 1, **caractérisé en ce que** la courroie (83, 93) est disposée parallèlement à un plan de courroie (A, B) qui est disposé obliquement par rapport à l'axe longitudinal (L).

3. Actionneur à rétroaction (7) selon l'une des revendications précédentes, **caractérisé en ce que** les deux poulies (81, 82, 91, 92) présentent chacune une forme de base conique avec des surfaces de roulement de courroie (810, 820, 910, 920) qui se rejoignent en forme de cône sur les côtés extérieurs des poulies (81, 82, 91, 92) opposés axialement les uns aux autres dans la direction de l'axe longitudinal (L).

4. Actionneur à rétroaction (7) selon l'une des revendications précédentes, **caractérisé en ce que** l'entraînement par courroie (8, 9) comprend une courroie plate (83, 93) et/ou une courroie trapézoïdale et/ou une courroie dentée.

5. Actionneur à rétroaction (7) selon l'une des revendications précédentes, **caractérisé en ce que** l'entraînement par courroie (8, 9) est réalisé à deux ou plusieurs niveaux.

6. Actionneur à rétroaction (7) selon l'une des revendications précédentes, **caractérisé en ce qu'**entre l'arbre moteur (72) et l'arbre de direction (4) est disposé au moins un arbre intermédiaire (73) qui présente deux poulies coaxiales (82, 91) solidaires en rotation.

7. Actionneur à rétroaction (7) selon la revendication 6, **caractérisé en ce que** l'arbre intermédiaire (73) est disposé coaxialement ou angulairement par rapport à l'arbre moteur (72) et/ou à l'arbre de direction (4).

8. Actionneur à rétroaction (7) selon l'une des revendications précédentes, **caractérisé en ce qu'**un dispositif de tension (76) est prévu pour tendre la courroie (83, 93).

9. Actionneur à rétroaction (7) selon la revendication 8, **caractérisé en ce que** le dispositif de tension présente un moyen de tension (76) qui sollicite au moins un brin de la courroie (83, 93) transversalement à l'extension de la courroie (83, 93) avec une force de tension.

10. Colonne de direction (7) pour un véhicule automobile, comprenant une unité d'enveloppe (3) pouvant être montée sur une carrosserie de véhicule automobile, dans laquelle un arbre de direction (4) est monté à rotation autour de son axe longitudinal (L) s'étendant dans la direction longitudinale, sur laquelle un volant de direction peut être monté, et qui est reliée à un actionneur à rétroaction (7), qui présente un moteur électrique (71) et un entraînement à courroie (8, 9), pour générer et coupler un couple de rétroaction dans l'arbre de direction (4),
**caractérisé en ce que**
**en ce que** l'actionneur à rétroaction (7) est réalisé selon l'une des revendications 1 à 9.

11. Colonne de direction selon la revendication 10, **caractérisée en ce que** l'actionneur à rétroaction (7) est disposé dans une enveloppe intérieure (33) réglable dans le sens longitudinal par rapport à l'unité d'enveloppe (3).
